# EUROPÄISCHE PATENTSCHRIFT

(11) **EP 3 992 486 B1**
(45) Veröffentlichungstag und Bekanntmachung des Hinweises auf die Patenterteilung: **04.10.2023**
(21) Anmeldenummer: 20204617.3
(22) Anmeldetag: 29.10.2020
(51) Int. Cl.: F16D 55/2255

(54) **LUFTDRUCKBREMSE MIT EINER FEDERSTÜTZE, SOWIE NUTZFAHRZEUG MIT EINER LUFTDRUCKBREMSE**
AIR PRESSURE BRAKE WITH A SPRING SUPPORT AND COMMERCIAL VEHICLE WITH AN AIR PRESSURE BRAKE
FREIN À AIR COMPRIMÉ DOTÉ D'UN SUPPORT DE RESSORT AINSI QUE VÉHICULE UTILITAIRE DOTÉ D'UN TEL FREIN À AIR COMPRIMÉ

(43) Veröffentlichungstag der Anmeldung: 04.05.2022
(73) Patentinhaber: ZF CV Systems Europe BV, 1170 Brussels (BE)
(72) Erfinder: STRZALA, Wieslaw, 46-220 Byczyna (PL)
(74) Vertreter: Rabe, Dirk-Heinrich

(56) Entgegenhaltungen:
- DE-A1-102017 108 175
- DE-U1-202006 021 291
- US-B1- 6 354 407

## Beschreibung

Die Erfindung betrifft eine Luftdruckbremse mit einem Bremssattel und einer Federstütze zur Fixierung von Bremsbelägen, wie sie beispielsweise in Lastkraftfahrzeugen oder Anhängefahrzeugen verwendet wird. Derartige Beispiele sind aus den DE102017108175 A1, DE202006021291U U1 bekannt.

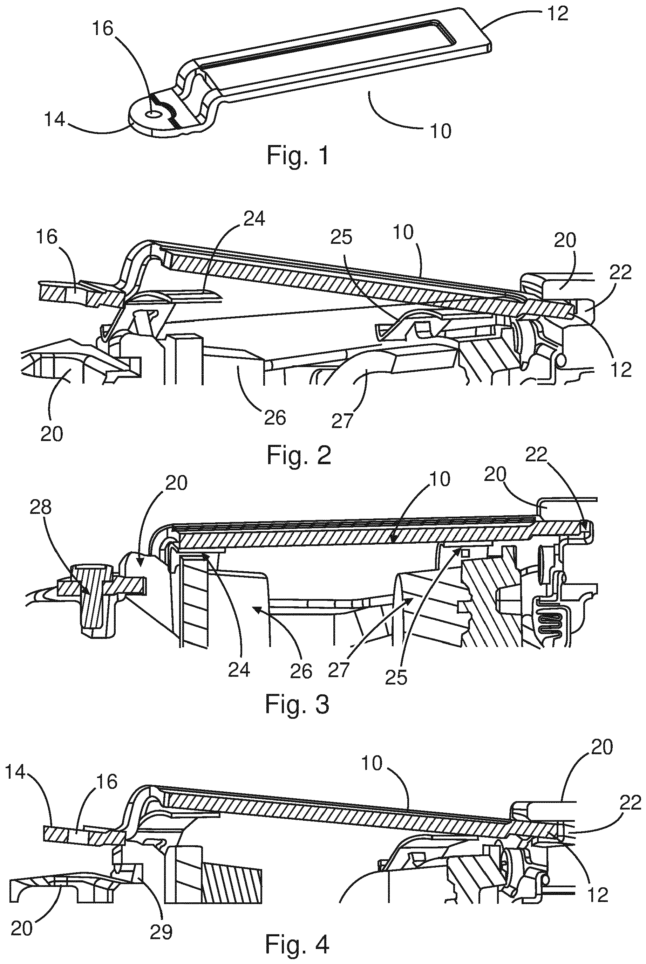

Eine Federstütze 10 dieser Art ist in der Fig. 1 dargestellt. Die Federstütze 10 weist ein Ende 12 auf, mit dem sie bei der Montage in eine Vertiefung eines Bremssattels geschoben wird, sowie ein gegenüberliegendes Ende 14 mit einem Loch 16, mit dem sie mit dem Bremssattel verschraubt wird.

Die Montage der Federstütze 10 in einen Bremssattel 20 ist in der Fig. 2 dargestellt. Die Federstütze 10 wird zuerst mit dem Ende 12 in eine Vertiefung 22 des Bremssattels 20 geschoben und anschließend auf den Bremssattel 20 gedrückt, bis sie auf dem Bremssattel 20 aufliegt. Hierbei werden zwei Blattfedern 24, 25 heruntergedrückt, die hierdurch einen Druck auf zwei Bremsbeläge 26, 27 ausüben zur Fixierung der Bremsbeläge 26, 27. Anschließend wird die Federstütze 10 mit einer Schraube 28 mit dem Bremssattel 20 verschraubt, wie in der Fig. 3 dargestellt.

Die Vertiefung 22 ist tiefer als notwendig, um Toleranzen auszugleichen. Es kann hierdurch passieren, dass die Federstütze 10 bei der Montage zu tief in die Vertiefung 22 geschoben wird. Hierdurch kollidiert die Federstütze 10 mit ihrem Ende 14 mit einer Umrandung 29 des Bremssattels 20 und kann hierdurch nicht mit dem Bremssattel 20 verschraubt werden, wie in der Fig. 4 dargestellt. In diesem Fall sind zusätzliche Montageschritte zur Korrektur der Federstütze 10 notwendig, die zu erhöhten Herstellungskosten führen.

Es besteht somit ein Bedarf für eine Luftdruckbremse mit einem Bremssattel und einer Federstütze, die geringere Montagekosten aufweist.

Aufgabe der Erfindung ist es daher, eine derartige Luftdruckbremse mit einem Bremssattel und einer Federstütze anzugeben, die eine vereinfachte Montage und hierdurch geringere Kosten aufweist.

Diese Aufgabe wird durch eine Luftdruckbremse gemäß Anspruch 1 und ein Nutzfahrzeug gemäß Anspruch 10 gelöst.

Die abhängigen Ansprüche beinhalten vorteilhafte Weiterbildungen und Verbesserungen der Erfindung entsprechend der nachfolgenden Beschreibung dieser Maßnahmen.

Die Erfindung betrifft eine Luftdruckbremse, die einen Bremssattel, mindestens eine Blattfeder und eine Federstütze aufweist. Die Federstütze ist bei einer Montage der Federstütze vor einer Verschraubung mit dem Bremssattel in eine Vertiefung des Bremssattels geschoben, und die Federstütze weist eine Markierung auf zur Justierung der Federstütze, oder der Bremssattel weist einen Einschnitt auf zur Justierung der Federstütze.

Erfindungsgemäß zeigt die Markierung der Federstütze oder der Einschnitt des Bremssattels an, wie tief die Federstütze in die Vertiefung des Bremssattels bei der Montage der Federstütze zu schieben ist. In einem bevorzugten Ausführungsbeispiel weist die Markierung die Form einer Einkerbung oder einer Vertiefung auf.

In einem weiteren bevorzugten Ausführungsbeispiel weist die Markierung die Form eines Aufklebers oder einer Farbmarkierung auf.

In einem weiteren bevorzugten Ausführungsbeispiel weist die Markierung die Form eines Lochs auf.

In einem weiteren bevorzugten Ausführungsbeispiel weist die Markierung die Form eines Einschnitts auf.

In einer weiteren vorteilhaften Ausführungsform weist die Markierung einen Abstand von dem Ende der Federstütze, mit dem die Federstütze in die Vertiefung des Bremssattels bei der Montage zu schieben ist, auf, der gleich ist der Länge, mit der die Federstütze in die Vertiefung des Bremssattels zu schieben ist.

In einer weiteren vorteilhaften Ausführungsform weist die Federstütze an einem Ende ein Loch für eine Verschraubung auf und an dem gegenüberliegenden Ende die Markierung auf.

In einer weiteren vorteilhaften Ausführungsform weist der Einschnitt des Bremssattels eine Tiefe auf, die gleich ist der Tiefe, mit der die Federstütze bei der Montage in die Vertiefung des Bremssattels zu schieben ist.

Die Luftdruckbremse ist vorteilhafterweise für ein Nutzfahrzeug, insbesondere für ein Lastkraftfahrzeug, sowie für ein Anhängefahrzeug, verwendbar.

Ausführungsbeispiele der Erfindung sind in den Zeichnungen schematisch dargestellt und werden nachfolgend anhand der Figuren näher erläutert.

Es zeigen:
- Fig. 1: eine Federstütze für eine Luftdruckbremse nach dem Stand der Technik;
- Fig. 2: die Montage einer Federstütze in einen Bremssattel nach dem Stand der Technik;
- Fig. 3: der Bremssattel der Figur 2 mit der montierten Federstütze;
- Fig. 4: eine falsche Montage der Federstütze in den in Fig. 2 dargestellten Bremssattel;
- Fig. 5: ein erstes Ausführungsbeispiel einer erfindungsgemäßen Federstütze für eine Luftdruckbremse;
- Fig. 6: ein zweites Ausführungsbeispiel einer erfindungsgemäßen Federstütze für eine Luftdruckbremse;
- Fig. 7: ein drittes Ausführungsbeispiel einer erfindungsgemäßen Federstütze für eine Luftdruckbremse;
- Fig. 8: ein viertes Ausführungsbeispiel einer erfindungsgemäßen Federstütze für eine Luftdruckbremse;
- Fig. 9: ein Ausführungsbeispiel eines erfindungsgemäßen Bremssattels für eine Luftdruckbremse;
- Fig. 10: eine korrekte Montage einer Federstütze in den Bremssattel der Fig. 9; und
- Fig. 11, 12: Montageschritte für eine Montage einer erfindungsgemäßen Federstütze in einen Bremssattel.

Die vorliegende Beschreibung veranschaulicht die Prinzipien der erfindungsgemäßen Offenbarung. Es versteht sich somit, dass Fachleute in der Lage sein werden, verschiedene Anordnungen zu konzipieren, die zwar hier nicht explizit beschrieben werden, die aber Prinzipien der erfindungsgemäßen Offenbarung verkörpern.

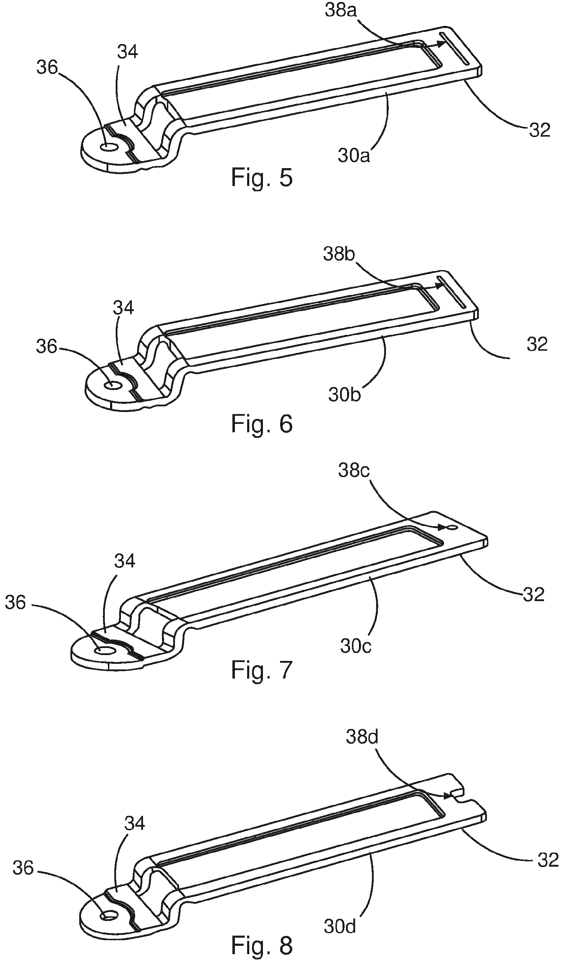

Die erfindungsgemäße Luftdruckbremse enthält einen Bremssattel und eine Federstütze 30a, die für eine korrekte Montage an einem Ende 32, mit dem sie in eine Vertiefung des Bremssattels geschoben wird, eine Markierung 38a aufweist, wie in der Fig. 5 dargestellt. Die Markierung 38a hat in diesem Ausführungsbeispiel die Form einer Einkerbung oder einer Vertiefung. Die Markierung 38a zeigt an, wie tief die Federstütze 30a bei der Montage in die Vertiefung des Bremssattels geschoben werden soll. An ihrem gegenüberliegenden Ende 34 weist die Federstütze 30a ein Loch 36 auf, mit dem sie an dem Bremssattel bei einer Montage der Luftdruckbremse verschraubt wird.

In einem anderen bevorzugten Ausführungsbeispiel weist eine Federstütze 30b eine Markierung 38b auf, die die Form eines Aufklebers oder einer Farbmarkierung hat, wie in der Fig. 6 dargestellt.

In einem anderen bevorzugten Ausführungsbeispiel weist eine Federstütze 30c eine Markierung 38c auf, die die Form eines Lochs aufweist, wie in der Fig. 7 dargestellt.

In einem anderen bevorzugten Ausführungsbeispiel weist eine Federstütze 30d eine Markierung 38d auf, die die Form eines Einschnitts an dem Ende 32 aufweist, das dem Ende 34 mit der Verschraubung gegenüber liegt, wie in der Fig. 8 dargestellt.

Die Markierungen 38a-d geben insbesondere einen Abstand von dem Ende 32 der Federstützen 30a-d an, mit dem die Federstützen 30a-d in die Vertiefung 42 bei der Montage zu schieben sind, der gleich ist der Länge, mit der die Federstützen 30a-d in die Vertiefung 42 zu schieben sind. Die Federstützen 30a-d werden beispielsweise in einen Bremssattel 40 montiert, der dem Bremssattel 20 der Fig. 2 entspricht.

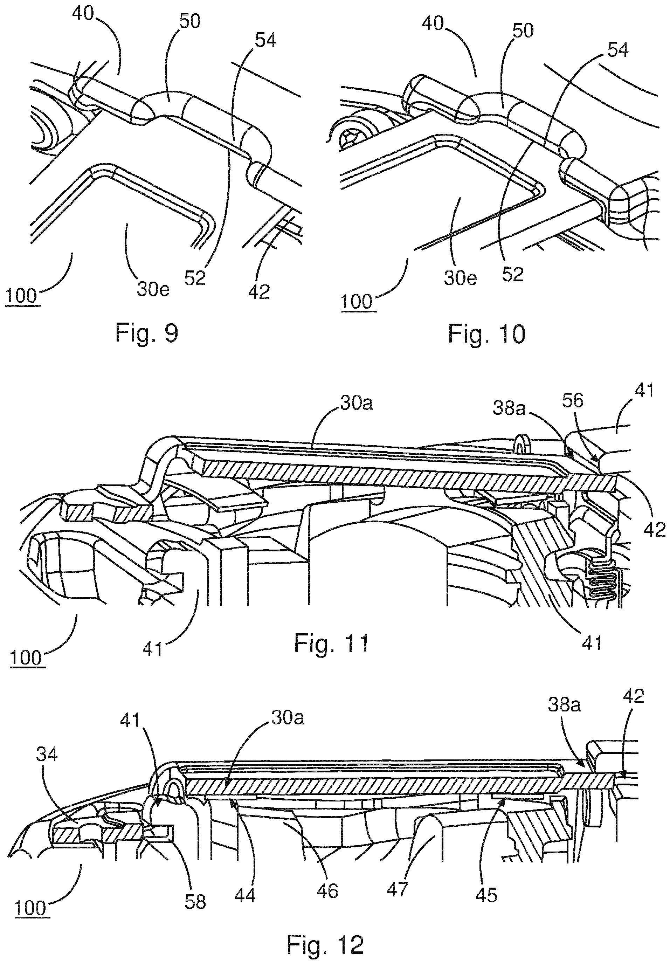

In einem anderen bevorzugten Ausführungsbeispiel weist ein Bremssattel 41 einer Luftdruckbremse 100 über einer Vertiefung 42, in die eine Federstütze 30e bei der Montage der Luftdruckbremse 100 geschoben wird, eine Markierung auf, die die Form eines Einschnitts 50 hat, wie in der Fig. 9 dargestellt. Die Federstütze 30e hat hierbei keine Markierung. Die Tiefe des Einschnitts 50 ist hierbei gleich der Tiefe, mit der die Federstütze 30e bei einer korrekten Montage in die Vertiefung 42 geschoben ist. Bei einer korrekten Montage der Federstütze 30e liegt daher eine Kante 52 der Federstütze 30e, mit der die Federstütze 30e in die Vertiefung 42 geschoben ist, genau über einer Kante 54 des Einschnitts 50, Fig. 10.

Die Markierungen 38a-d der Federstützen 30a-d sind insbesondere derart gewählt, dass die Markierungen 38a-d bei einer korrekten Montage an einem oberen Rand 56 der Vertiefung 42 des Bremssattels 41 liegen, wie in der Fig. 11 dargestellt. Die in der Fig. 11 dargestellte Federstütze entspricht hierbei der Federstütze 30a, die einen Einschnitt 38a aufweist. Hierdurch ist sichergestellt, dass die Federstütze 30a nicht mit ihrem anderen Ende 34 mit einer Umrandung 58 des Bremssattels 41 kollidiert, wie in der Fig. 12 dargestellt. Es sind daher bei der Montage der Luftdruckbremse 100 keine weiteren Montageschritte zur Justierung der Federstütze 30a notwendig, da die Federstütze 30a gleich in einem ersten Montageschritt richtig positioniert werden kann. Durch die Federstütze 30a werden zwei Blattfedern 44, 45 auf Bremsbeläge 46, 47 der Luftdruckbremse 100 gedrückt, die hierdurch positioniert werden.

Alle hierin erwähnten Beispiele wie auch bedingte Formulierungen sind ohne Einschränkung auf solche speziell angeführten Ausführungsbeispiele zu verstehen. Die Offenbarung ist nicht auf die hier beschriebenen Ausführungsbeispiele beschränkt. Es gibt Raum für verschiedene Anpassungen und Modifikationen, die der Fachmann aufgrund seines Fachwissens als auch zu der Offenbarung zugehörend in Betracht ziehen würde.

### Bezugszeichenliste (Teil der Beschreibung)

- 10: Federstütze
- 12, 14: Enden einer Federstütze
- 16: Loch einer Federstütze
- 20: Bremssattel
- 22: Vertiefung eines Bremssattels
- 24, 25: Blattfedern
- 26, 27: Bremsbeläge
- 28: Schraube
- 29: Umrandung eines Bremssattels
- 30a-e: Federstützen
- 32, 34: Enden einer Federstütze
- 36: Loch einer Federstütze
- 38a-d: Markierungen
- 40, 41: Bremssättel
- 42: Vertiefung eines Bremssattels
- 44, 45: Blattfedern
- 46,47: Bremsbeläge
- 50: Einschnitt
- 52: Kante einer Federstütze
- 54: Kante eines Einschnitts
- 56: Rand der Vertiefung eines Bremssattels
- 58: Umrandung eines Bremssattels
- 100: Luftdruckbremse

## Patentansprüche

1. Luftdruckbremse (100) mit einem Bremssattel (40, 41), mindestens einer Blattfeder (44, 45) und mit einer Federstütze (30a-e), wobei die Federstütze bei einer Montage vor einer Verschraubung mit dem Bremssattel in eine Vertiefung (42) des Bremssattels geschoben ist, **dadurch gekennzeichnet, dass** die Federstütze (30a-d) eine Markierung (38a-d) zur Justierung der Federstütze (30a-d) aufweist, oder der Bremssattel (40) einen Einschnitt (50) zur Justierung der Federstütze (30e) aufweist.

2. Luftdruckbremse (100) nach Anspruch 1, wobei die Markierung (38a-d) oder der Einschnitt (50) anzeigen, wie tief die Federstütze (30a-e) in die Vertiefung des Bremssattels (42) bei der Montage der Federstütze (30a-e) zu schieben ist.

3. Luftdruckbremse (100) nach Anspruch 1 oder 2, wobei die Markierung (38a) die Form einer Einkerbung oder einer Vertiefung aufweist.

4. Luftdruckbremse (100) nach Anspruch 1 oder 2, wobei die Markierung (38b) die Form eines Aufklebers oder einer Farbmarkierung aufweist.

5. Luftdruckbremse (100) nach Anspruch 1 oder 2, wobei die Markierung (38c) die Form eines Lochs aufweist.

6. Luftdruckbremse (100) nach Anspruch 1 oder 2, wobei die Markierung (38d) die Form eines Einschnitts aufweist.

7. Luftdruckbremse (100) nach einem der vorangehenden Ansprüche 3-6, wobei die Markierung (38a-d) einen Abstand von dem Ende (32) der Federstütze (30a-d), mit dem die Federstütze in die Vertiefung (42) des Bremssattels (41) bei der Montage zu schieben ist, aufweist, der gleich ist der Länge, mit der die Federstütze (30a-d) in die Vertiefung (42) des Bremssattels (41) zu schieben ist.

8. Luftdruckbremse (100) nach einem der vorangehenden Ansprüche, wobei die Federstütze (30a-d) an einem Ende (34) ein Loch (36) für eine Verschraubung aufweist und an dem gegenüberliegenden Ende (32) die Markierung (38a-d) aufweist.

9. Luftdruckbremse (100) nach Anspruch 1 oder 2, wobei der Einschnitt (50) des Bremssattels (40) eine Tiefe aufweist, die gleich ist der Tiefe, mit der die Federstütze (30e) bei der Montage in die Vertiefung (42) des Bremssattels (40) zu schieben ist.

10. Nutzfahrzeug, insbesondere Lastkraftfahrzeug oder Anhängefahrzeug, das eine Luftdruckbremse (100) nach einem der vorangehenden Ansprüche aufweist.

## Claims

1. An air brake (100) having a brake caliper (40, 41), at least one leaf spring (44, 45) and having a spring support (30a-e), wherein the spring support is pushed into a recess (42) in the brake caliper during assembly before being screwed to the brake caliper, **characterized in that** the spring support (30a-d) has a marker (38a-d) for adjusting the spring support (30a-d), or the brake caliper (40) has a notch (50) for adjusting the spring support (30e).

2. The air brake (100) according to claim 1, wherein the marker (38a-d) or the notch (50) indicate how deeply the spring support (30a-e) is to be pushed into the recess of the brake caliper (42) during the assembly of the spring support (30a-e).

3. The air brake (100) according to claim 1 or 2, wherein the marker (38a) is in the form of an indentation or a recess.

4. The air brake (100) according to claim 1 or 2, wherein the marker (38b) is in the form of a sticker or a color marking.

5. The air brake (100) according to claim 1 or 2, wherein the marker (38c) is in the form of a hole.

6. The air brake (100) according to claim 1 or 2, wherein the marker (38d) is in the form of a notch.

7. The air brake (100) according to any of the preceding claims 3-6, wherein the marker (38a-d) is at a distance from the end (32) of the spring support (30a-d) to which the spring support is to be pushed into the recess (42) of the brake caliper (41) during assembly, which distance is equal to the length at which the spring support (30a-d) is to be pushed into the recess (42) of the brake caliper (41).

8. The air brake (100) according to any of the preceding claims, wherein the spring support (30a-d) has a hole (36) for a screw connection at one end (34), and has the marker (38a-d) at the opposite end (32).

9. The air brake (100) according to claim 1 or 2, wherein the notch (50) of the brake caliper (40) has a depth equal to the depth at which the spring support (30e) is to be pushed into the recess (42) of the brake caliper (40) during assembly.

10. A commercial vehicle, in particular a heavy goods vehicle or trailer vehicle, having an air brake (100) according to any of the preceding claims.

## Revendications

1. Frein à air comprimé (100) comportant un étrier de frein (40, 41), au moins un ressort à lames (44, 45) et comportant un support de ressort (30a-e), dans lequel le support de ressort est poussé dans une cavité (42) de l'étrier de frein lors d'un montage avant le vissage à l'étrier de frein, **caractérisé en ce que** le support de ressort (30a-d) présente un marquage (38a-d) pour l'ajustement du support de ressort (30a-d), ou l'étrier de frein (40) présente une entaille (50) pour l'ajustement du support de ressort (30e).

2. Frein à air comprimé (100) selon la revendication 1, dans lequel le marquage (38a-d) ou l'entaille (50) indique la profondeur à laquelle le support de ressort (30a-e) doit être poussé dans la cavité de l'étrier de frein (42) lors du montage du support de ressort (30a-e).

3. Frein à air comprimé (100) selon la revendication 1 ou 2, dans lequel le marquage (38a) présente la forme d'une encoche ou d'une cavité.

4. Frein à air comprimé (100) selon la revendication 1 ou 2, dans lequel le marquage (38b) présente la forme d'un autocollant ou d'un marquage de couleur.

5. Frein à air comprimé (100) selon la revendication 1 ou 2, dans lequel le marquage (38c) présente la forme d'un trou.

6. Frein à air comprimé (100) selon la revendication 1 ou 2, dans lequel le marquage (38d) présente la forme d'une entaille.

7. Frein à air comprimé (100) selon l'une des revendications précédentes 3 à 6, dans lequel le marquage (38a-d) présente une distance par rapport à l'extrémité (32) du support de ressort (30a-d) avec laquelle le support de ressort doit être poussé dans la cavité (42) de l'étrier de frein (41) lors du montage, laquelle distance est égale à la longueur à laquelle le support de ressort (30a-d) doit être poussé dans la cavité (42) de l'étrier de frein (41).

8. Frein à air comprimé (100) selon l'une des revendications précédentes, dans lequel le support de ressort (30a-d) présente un trou (36) pour un vissage à une extrémité (34) et présente le marquage (38a-d) à l'extrémité (32) opposée.

9. Frein à air comprimé (100) selon la revendication 1 ou 2, dans lequel l'entaille (50) de l'étrier de frein (40) présente une profondeur qui est égale à la profondeur à laquelle le support de ressort (30e) doit être poussé dans la cavité (42) de l'étrier de frein (40) lors du montage.

10. Véhicule utilitaire, en particulier camion ou véhicule tracté, lequel présente un frein à air comprimé (100) selon l'une des revendications précédentes.
